# EUROPEAN PATENT SPECIFICATION

(11) **EP 0 545 541 B1**
(45) Date of publication and mention of the grant of the patent: **21.02.1996**
(21) Application number: 92309920.4
(22) Date of filing: 29.10.1992
(51) Int. Cl.: A63B 37/00, C08K 5/09, C08L 9/00

(54) **Two-piece golf ball**
Zweiteiliger Golfball
Balle de golf en deux parties

(30) Priority: 01.11.1991 JP 287495/91
(43) Date of publication of application: 09.06.1993
(73) Proprietor: SUMITOMO RUBBER INDUSTRIES, LTD., Chuo-ku Kobe-shi Hyogo-ken 651 (JP)
(72) Inventor: Yabuki, Yoshikazu, Akashi-shi, Hyogo-ken (JP); Endo, Seiichiro, Uozumi-cho, Akashi-shi, Hyogo-ken (JP)
(74) Representative: Allard, Susan Joyce

(56) References cited:
- GB-A- 2 127 303
- US-A- 4 858 924
- DATABASE WPIL Section Ch, Week 8415, Derwent Publications Ltd., London, GB; Class A, AN 84-091534, & JP-A-59 037 961 (SUMITOMO RUBBER INDUSTRIES LTD.) 1 March 1984

## Description

The present invention relates to a two piece golf ball. Particularly, it relates to a two piece golf ball having an excellent shot feel.

A two piece golf ball has been widely used because of its high flying performance. However, the shot feel of a two piece golf ball is hard in comparison with a conventional thread wound golf ball and it gives a harder feeling on a misshot and, therefore, specific users, particularly, women or elderly persons are liable to avoid the two piece golf ball.

In order to obtain a shot feel similar to that of the thread wound golf ball, various efforts have been made. For example, the shot feel has been improved by softening either the cover or the core of the golf ball. However, according to these methods, the shot feel of the resulting golf ball is soft but feels heavy and, therefore, it is not necessarily similar to that of the thread wound golf ball.

Under these circumstances, the present inventors have intensively studied the shot feel of golf balls. Firstly, when the hardness of the core of the golf ball is softened, the shot feel becomes soft. The impact resilience of the ball, however, deteriorates because of the lack of total stiffness, which results in a poor shot feel. Futhermore, when the cover is softened, the impact resilience is lowered and, therefore, the impact resilience of the ball becomes inferior. Users feel the hardness of the core more when the cover is soft, which results in a hard and heavy shot feel. Accordingly, it has been found that an excellent shot feel can be obtained by supplying the soft core with the improvement of properties of the cover.

US-A-4,858,924 discloses solid golf balls comprising a solid core and a cover. The solid core is formed from a composition comprising a polybutadiene rubber and an unsaturated carboxylic acid and/or a metal salt thereof. The core has a deformation of 1.5 to 3.5 mm under a constant load of 100 kg. The difference in hardness between the centre and the periphery of the solid ball is less than 10%. The cover is formed from a thermoplastic resin composition, has a resilience of at least 35%, a flexural modulus of 1,500 to 4,500 kg/cm² and a thickness of 0.3 to 1.8 mm.

We have now developed a two piece golf ball having a shot feel similar to that of a thread wound golf ball by controlling both the properties of the core and of the cover of the two piece golf ball.

According, to the present invention, there is provided a two piece golf ball which comprises a core and a cover, wherein the core is prepared from a rubber composition comprising 100 parts by weight of a cis-1,4-poly-butadiene rubber and 20 to 30 parts by weight (based on 100 parts by weight of the rubber) of a metal salt of an unsaturated carboxylic acid, and the cover has a stiffness modulus of 3,700 to 4,500 kg/cm² characterized in that the core has a deformation (compression deformation) of 3.7 to 4.5 mm caused by applying from 10 kg of an initial load to 130 kg of a final load, and wherein the cover has a thickness of 2.2 to 2.9 mm.

The core of the two piece golf ball of the present invention is formed from a rubber composition comprising 100 parts by weight of a so-called high cispolybutadiene rubber having a cis-1,4 structure of at least 40%, preferably not less than 80% and 20 to 30 parts by weight (based on 100 parts by weight of the rubber) of a metal salt of an unsaturated carboxylic acid. The metal salt of the unsaturated carboxylic acid is generally formulated as a co-crosslinking agent, and may be selected, for example, from metal salts of acrylic acid (e.g. zinc acrylate, magnesium acrylate, etc.) and metal salts of methacrylic acid (e.g. zinc methacrylate, magnesium methacrylate, etc). The amount of the metal salt of the unsaturated carboxylic acid (20 to 30 parts by weight) based on 100 parts by weight of the rubber is small in comparison with the conventional amounts used. By using such a small amount, an excellent shot feel is provided.

As a matter of course, the rubber composition may contain ingredients which are normally contained in a rubber composition for the core of the golf ball, in addition to the metal salt of the unsaturated carboxylic acid. Examples thereof include organic peroxides as crosslinking agents, fillers, antioxidants and stabilizers. Examples of the organic peroxide include dicumyl peroxide, 1,1-bis(t-butylperoxy)-3,5-trimethylcyclohexane, 2,5-dimethyl-2,5-di(t-butylperoxy)hexane and di-t-butyl peroxide. Dicumyl peroxide is particularly preferred. The amount of the organic peroxide is 0.3 to 3.0 parts by weight, preferably 1.0 to 2.5 parts by weight based on 100 parts by weight of the base rubber. Examples of the filler include zinc oxide, barium sulfate, calcium carbonate and water-containing acid salts.

The above rubber composition is sufficiently kneaded and then vulcanized and formed in a mold to form a core for the two piece golf ball. The kneading and vulcanization conditions are known in the art and the vulcanization is normally conducted at a temperature of from 140 to 180°C for from 15 to 55 minutes.

It is necessary that the core of the golf ball of the present invention has a compression deformation (the deformation caused by applying from 10 kg of an initial load to 130 kg of a final load) of 3.7 to 4.5 mm. The compression deformation can be controlled by the amount of the metal salt of the unsaturated carboxylic acid and it can also be controlled by the other vulcanization conditions. Even if the control is conducted by any method the rebound coefficient is lowered and the flying performance deteriorates when the deformation of the core is too large. Essentially, the ball is too soft, which results in a heavy and poor shot feel. On the contrary, when the deformation is below 3.7 mm, the maximum impact force is large and, therefore the shot feel is hard.

It is preferred that the hardness (JIS-C) of the core satisfies the following conditions:

| | |
|---|---|
| Centre: | 56 to 58 |
| 5 to 10 mm away from the centre: (deviation ± 3%) | 68 to 73 |
| 15 mm away from the centre: | 74 to 80 |
| Surface: | 75 to 83. |

The technique wherein hardness distribution is specified is described in Japanese Patent Kokai No. 60-90575.

The core of the golf ball thus obtained is covered with a cover (normally, an ionomer resin) to obtain a two piece golf ball. It is necessary that the cover of the two piece golf ball of the present invention has a stiffness modulus of 3700 to 4500 kg/cm² and a thickness of 2.2 to 2.9 mm. When the stiffness modulus is less than 3700 kg/cm², the modulus of the cover is low and the impact resilience is slightly lowered, which results in a deterioration in the flying performance. In this case, both the cover and the core become soft, which results in a heavy and poor shot feel. Furthermore, when the stiffness modulus exceeds 4500 kg/cm², spinning on flight is lowered and the ball drops slightly and, therefore, the flying performance is inferior. Furthermore, the impact force becomes high, which results in a hard shot feel. When the thickness of the cover is less than 2.2 mm, no specified effect of stiffness modulus of the cover is obtained and the shot feel is influenced only by the core. On the contrary, when the thickness exceeds 2.9 mm the shot feel does not reflect the properties of the core and a sufficient effect of the present invention is not obtained.

The cover having the above properties can be obtained by mixing various ionomer resins. Examples of suitable ionomer resins include HI-MILAN 1706, 1605 available from Mitsui Polychemicals Co.; and ESCOR EX 951, 562, 900 available from EXXON Co.

A method for covering a cover with an ionomer resin is known. Generally, it is conducted by an injection molding process.

The two piece golf ball thus obtained has an excellent shot feel. It is considered that the shot feel is a feeling specific to the person who hits the golf ball and thus it is difficult to indicate it with a numerical value. However, the present inventors have considered that it is possible to indicate it with a maximum impact index, a contact area, a contact time and the like and they were measured. These properties vary depending upon a kind of club used and other test conditions. For example, if each numerical value of the maximum impact force, contact time, contact area and maximum deformation rate of Example 1 is made 100, the shot feel should be excellent when each property satisfies the conditions of 100±3, 100±3, 100±4, 100±4, respectively.

The two piece golf ball of the present invention has a shot feel which is similar to that of a conventional thread wound golf ball and has feeling performance of the two piece golf ball per se. The two piece golf ball is superior in both flying performance and shot feel.

The following Examples further illustrate the present invention in detail but are not to be construed to limit the scope thereof.

### Examples 1 to 6 and Comparative Examples 1 to 6

Formulation ingredients for the core shown in Table 1 were kneaded to obtain a rubber composition. The rubber composition was vulcanized and formed in a mold at 165°C for 25 minutes. The hardness distribution and compression hardness of the resulting core are shown in Table 1.

The core was covered with a cover resin which was prepared from the formulation ingredients for the cover resin shown in Table 1. The stiffness modulus and cover thickness are shown in Table 1.

A property (hardness measured by PGA system), a durability index, a maximum impact force, a contact area, a contact time, a maximum deformation rate, a restitution coefficient, a launch angle, a spin performance, a flying distance (carry) and a hit feeling of the resulting large size two piece golf ball are shown in Table 2. Further, evaluation of feeling was conducted by the following criteria:
- A:: good showing good feeling
- B:: fairly good showing too soft or slightly hard
- C:: bad showing too hard.

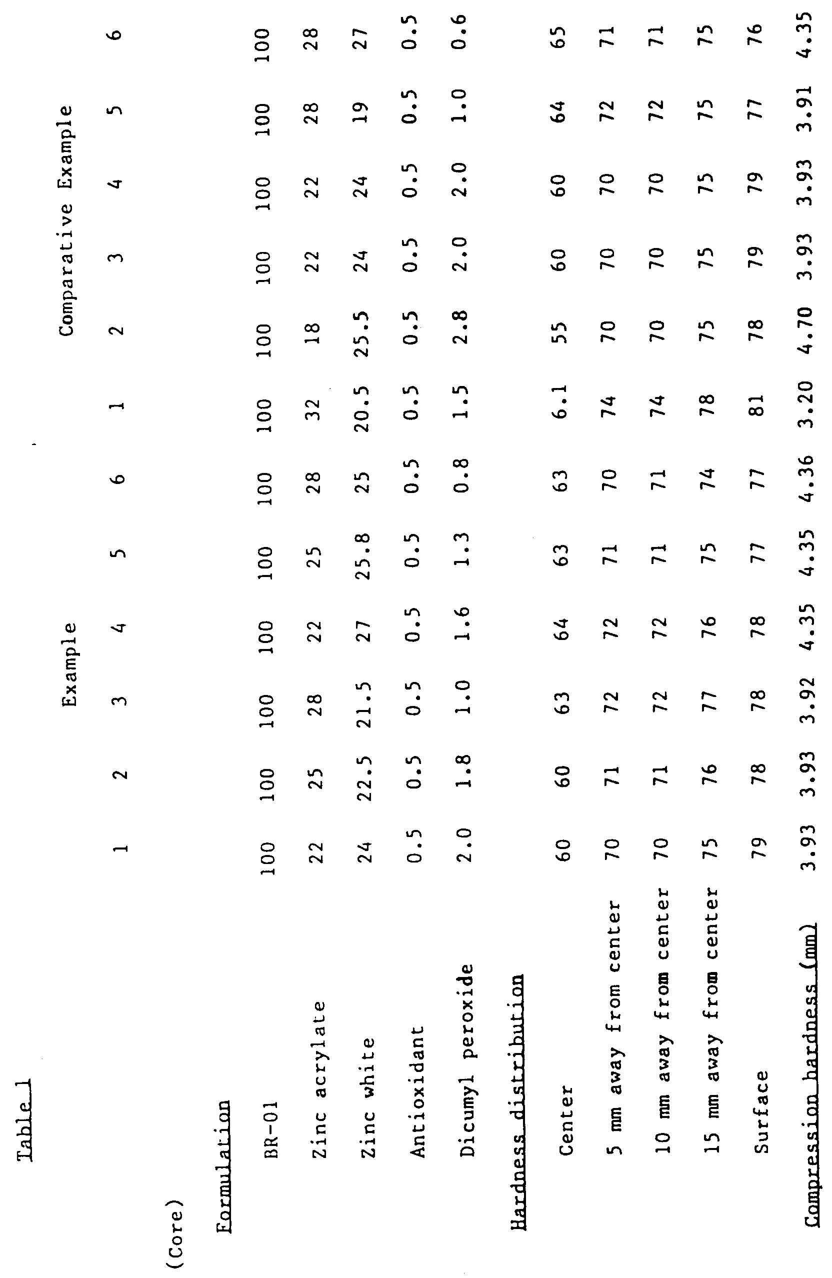

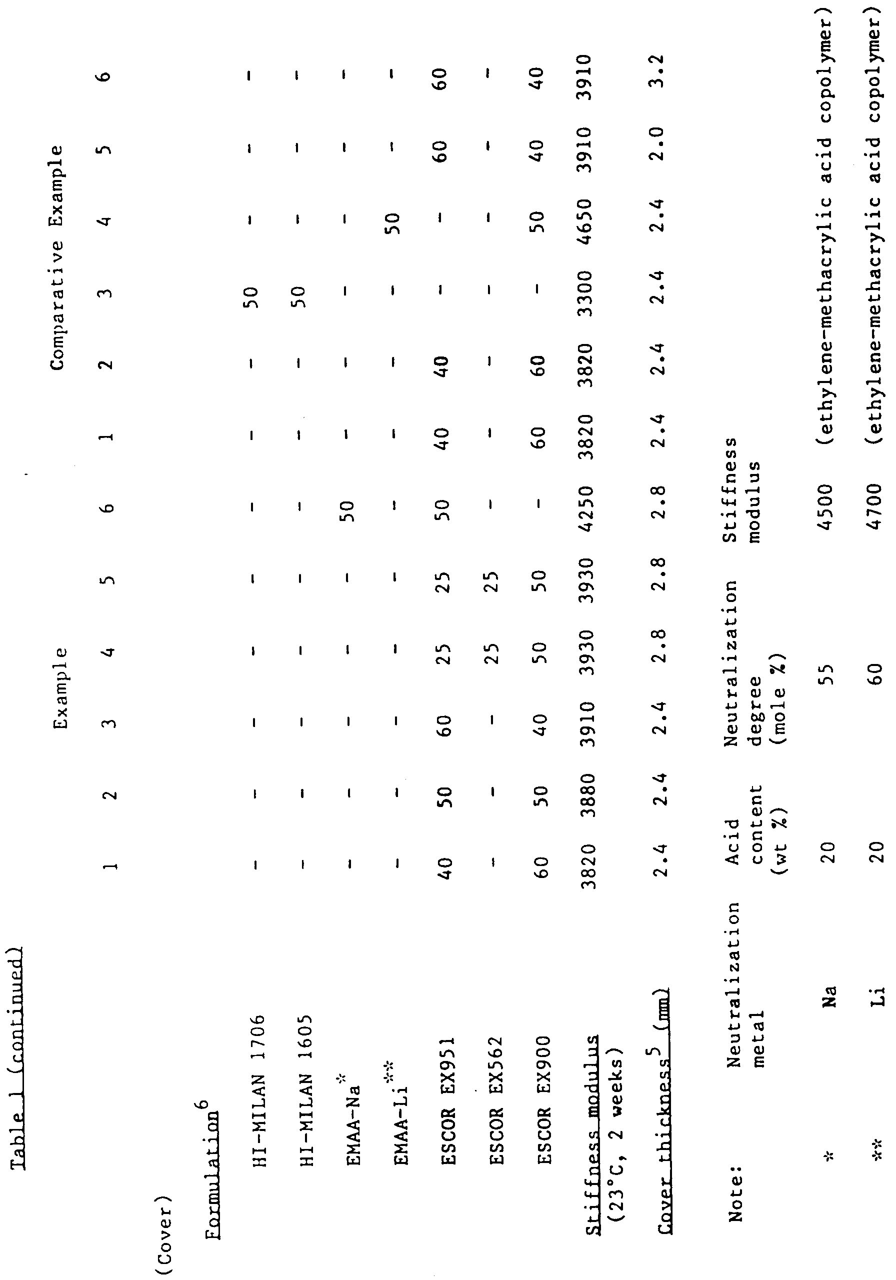

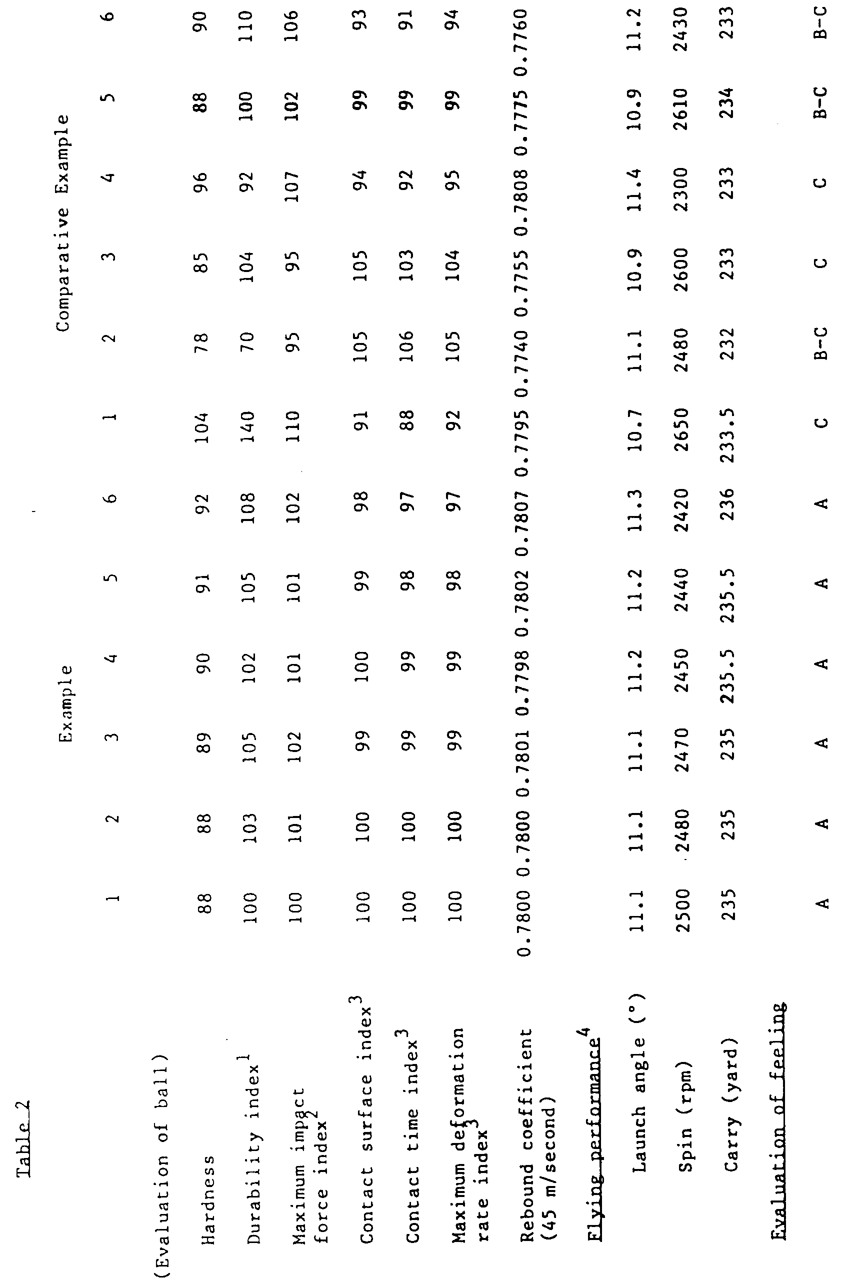

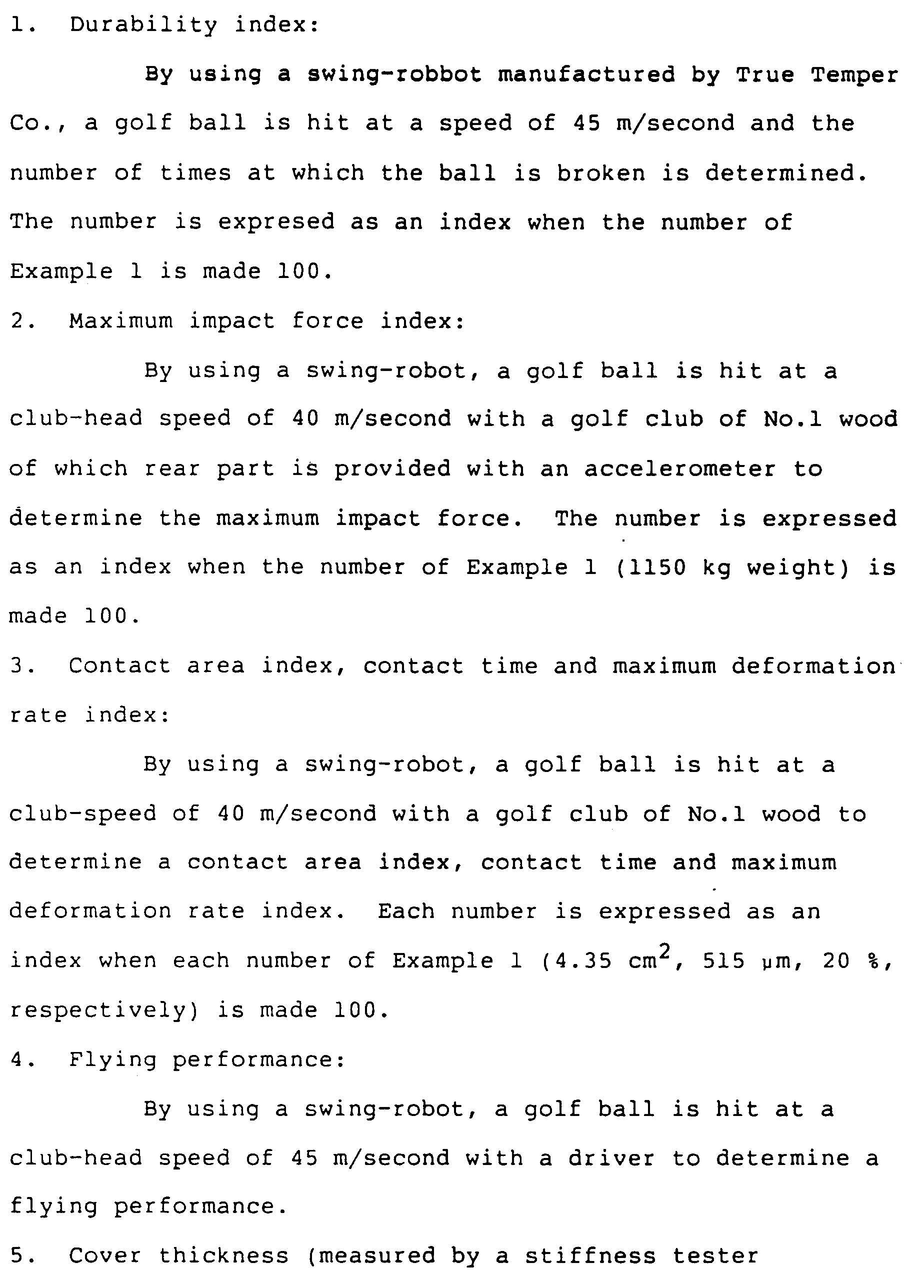

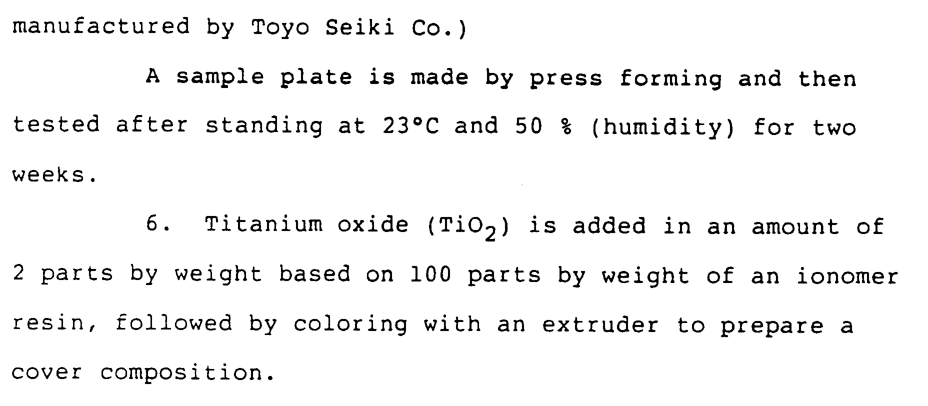

## Claims

1. A two piece golf ball which comprises a core and a cover, wherein the core is prepared from a rubber composition comprising 100 parts by weight of a cis-1,4-poly-butadiene rubber and 20 to 30 parts by weight (based on 100 parts by weight of the rubber) of a metal salt of an unsaturated carboxylic acid, and the cover has a stiffness modulus of 3,700 to 4,500 kg/cm² characterized in that the core has a deformation (compression deformation) of 3.7 to 4.5 mm caused by applying from 10 kg of an initial load to 130 kg of a final load and wherein the cover has a thickness of 2.2 to 2.9 mm.

2. A golf ball as claimed in claim 1 wherein the core is formed from a rubber composition comprising 100 parts by weight of high cispolybutadiene rubber having a cis-1,4 structure of at least 40% and 20 to 30 parts by weight (based on 100 parts by weight of the rubber) of a metal salt of an unsaturated carboxylic acid.

3. A golf ball as claimed in claim 2 wherein the high cispolybutadiene rubber has at least 80% of the cis-1,4 structure.

4. A golf ball as claimed in any one of the preceding claims wherein the rubber composition further contains an organic peroxide and/or a filler.

5. A golf ball as claimed in any one of the preceding claims wherein the hardness (JIS-C) of the core satisfies the following conditions:
| | |
|---|---|
| Centre: | 56 to 58 |
| 5 to 10 mm away from the centre: (deviation ± 3%) | 68 to 73 |
| 15 mm away from the centre: | 74 to 80 |
| Surface: | 75 to 83. |

6. A golf ball as claimed in any one of the preceding claims wherein the cover comprises an ionomer resin.

## Patentansprüche

1. Zweiteiliger Golfball, der einen Kern und eine Ummantelung umfaßt, wobei der Kern aus einer Kautschukzusammensetzung, umfassend 100 Gewichtsteile eines cis-1,4-Polybutadienkautschuks und 20 bis 30 Gewichtsteile (bezogen auf 100 Gewichtsteile des Kautschuks) eines Metallsalzes einer ungesättigten Carbonsäure, hergestellt wird, und die Ummantelung ein Steifigkeitsmodul von 3.700 bis 4.500 kg/cm² besitzt, dadurch gekennzeichnet, daß der Kern eine Verformung (Druckverformung) von 3,7 bis 4,5 mm, die durch Anlegen einer Anfangsbelastung von 10 kg bis zu einer Endbelastung von 130 kg verursacht wird, aufweist, und wobei die Ummantelung eine Dicke von 2,2 bis 2,9 mm besitzt.

2. Golfball nach Anspruch 1, wobei der Kern aus einer Kautschukzusammensetzung, umfassend 100 Gewichtsteile eines Hoch-cis-Polybutadienkautschuks, der eine cis-1,4-Struktur von wenigstens 40% aufweist, und 20 bis 30 Gewichtsteile (bezogen auf 100 Gewichtsteile des Kautschuks) eines Metallsalzes einer ungesättigten Carbonsäure, erzeugt wird.

3. Golfball nach Anspruch 2, wobei der Hoch-cis-Polybutadienkautschuk wenigstens zu 80% eine cis-1,4-Struktur aufweist.

4. Golfball nach einem der vorstehenden Ansprüche, wobei die Kautschukzusammensetzung ferner ein organisches Peroxid und/oder einen Füllstoff enthält.

5. Golfball nach einem der vorstehenden Ansprüche, wobei die Härte (JIS-C) des Kerns den folgenden Bedingungen genügt:
| | |
|---|---|
| Zentrum: | 56 bis 58 |
| 5 bis 10 mm vom Zentrum entfernt (Abweichung ± 3%): | 68 bis 73 |
| 15 mm vom Zentrum entfernt: | 74 bis 80 |
| Oberfläche: | 75 bis 83. |

6. Golfball nach einem der vorstehenden Ansprüche, wobei die Ummantelung ein Ionomerharz umfaßt.

## Revendications

1. Balle de golf en deux parties qui comprend un coeur et une enveloppe, où on prépare le coeur à partir d'une composition de caoutchouc comprenant 100 parties en poids d'un caoutchouc cis-1,4-poly-butadiène et de 20 à 30 parties en poids (par rapport à 100 parties en poids de caoutchouc) d'un sel de métal d'un acide carboxylique insaturé et l'enveloppe a un module de raideur de 3700 à 4500 kg/cm², caractérisée en ce que le coeur a une déformation (déformation à la compression) de 3,7 à 4,5 mm causée par l'application d'une charge variant de 10 kg initialement à 130 kg finalement et où l'enveloppe a une épaisseur de 2,2 à 2,9 mm.

2. Balle de golf selon la revendication 1, où le coeur est formé à partir d'une composition de caoutchouc comprenant 100 parties en poids de caoutchouc haut polymère de cispolybutadiène ayant une structure cis-1,4 d'au moins 40 % et 20 à 30 parties en poids par rapport à 100 parties en poids du caoutchouc d'un sel de métal d'un acide carboxylique insaturé.

3. Balle de golf selon la revendication 2, où le caoutchouc haut polymère de cispolybutadiène a au moins 80 % de structure cis-1,4.

4. Balle de golf selon l'une quelconque des revendications précédentes, où la composition de caoutchouc contient en outre un peroxyde organique et/ou une charge.

5. Balle de golf selon l'une quelconque des revendications précédentes, où la dureté (JIS-C) du coeur remplit les conditions suivantes :
| | |
|---|---|
| centre : | 56 à 58 |
| entre 5 et 10 mm au-delà du centre : (écart ± 3 %) | 68 à 73 |
| 15 mm au-delà du centre : | 74 à 80 |
| surface : | 75 à 83. |

6. Balle de golf selon l'une quelconque des revendications précédentes, où l'enveloppe comprend une résine ionomère.
